# EUROPÄISCHE PATENTSCHRIFT

(11) **EP 2 997 282 B1**
(45) Veröffentlichungstag und Bekanntmachung des Hinweises auf die Patenterteilung: **10.04.2019**
(21) Anmeldenummer: 14728848.4
(22) Anmeldetag: 13.05.2014
(51) Int. Cl.: F16F 9/36

(54) **KOLBENSTANGENFÜHRUNG**
PISTON ROD GUIDE
GUIDE DE TIGE DE PISTON

(30) Priorität: 13.05.2013 DE 202013102083 U
(43) Veröffentlichungstag der Anmeldung: 23.03.2016
(73) Patentinhaber: AL-KO Record, S.A., 48220 Abadiano (ES)
(72) Erfinder: FRIESS, Gerhard, E-48340 Amorebieta (ES)
(74) Vertreter: Ernicke, Klaus Stefan
(86) Internationale Anmeldenummer: PCT/EP2014/059751
(87) Internationale Veröffentlichungsnummer: WO 2014/184186

(56) Entgegenhaltungen:
- GB-A- 2 135 405
- JP-U- H0 471 835
- JP-U- H0 496 638
- JP-U- S5 869 157

## Beschreibung

Die Erfindung betrifft eine Kolbenstangenführung für Zylinder mit den Merkmalen im Oberbegriff des Hauptanspruchs.

Eine solche Kolbenstangenführung ist aus der JP H04-71835U bekannt. Sie weist ein Dichtungselement mit einem an der Kolbenstange anliegenden axialen Dichtring und ein ringartiges Führungselement mit einem Außenring, einem ersten Zwischenring und einem zur Außenseite führenden Ölkanal mit mehreren Kanalabschnitten auf. Der erste Zwischenring ist radial mit Abstand vom Dichtring distanziert, wobei eine große Öltasche zwischen dem Zwischenring und der Kolbenstange gebildet wird. Der Dichtring weist eine separate Lippe auf, die an der schrägen Rückseite des Zwischenrings anliegt und dadurch den Durchfluss von Leckageöl über den Zwischenring und weiter radial nach außen zu Auslassöffnungen am Führungselement blockiert. Ein Durchfluss ist erst möglich, wenn der Staudruck in der Tasche so groß wird, dass die Anpresskraft dieser Lippe überwunden werden kann.

Die GB 2 135 405 A zeigt eine andere Kolbenstangenführung mit einem einfachen ringscheibenartigen Führungselement, das mit Abstand unterhalb des Dichtungselements angeordnet ist. Das Dichtungselement ist radial an der Kolbenstange und am Zylindermantel abgestützt, wobei eine schräg abwärts gerichtete Dichtzuge am Außenrand des Führungselements anliegt.

Die JP H04-96638 U und die JP S58-69157U befassen sich mit ähnlichen Kolbenstangenführungen, bei denen ein Dichtungselement mit Abstand über einem ringscheibenartigen Führungselement schwebt.

Eine andere Kolbenstangenführung ist aus der EP 2 116 738 B1 bekannt. Sie besteht aus einem Führungselement und einem Dichtungselement sowie einem Ölkanal, der als Quer- oder Radialbohrung im Führungselement ausgebildet ist.

Es ist Aufgabe der vorliegenden Erfindung, eine bessere Kolbenstangenführung aufzuzeigen.

Die Erfindung löst diese Aufgabe mit den Merkmalen im Hauptanspruch.
Die beanspruchte Kolbenstangenführung hat herstellungstechnische und kostenmäßige Vorteile. Der zwischen dem Führungs- und Dichtungselement ausgebildete Ölkanal wird von beiden Elementen begrenzt.

Das Führungselement und ggf. das Dichtungselement weisen hierfür eine entsprechend angepasste und insbesondere profilierte Formgebung auf. Eine solche Profilierung ist einfacher und kostengünstiger herstellbar als eine Quer- oder Radialbohrung. Das Führungselement ist an seiner zum benachbarten Zylinderende weisenden Oberseite profiliert. Es kann kostengünstig als Sinter- oder Gussteil hergestellt werden.

Die beanspruchte Kolbenstangenführung hat ferner den Vorteil, dass die Formgebung und Funktionalität des Ölkanals verbessert werden kann. Er kann besser und sicherer das an der Kolbenstange im Führungsbereich austretende Öl aufnehmen und abführen, insbesondere radial nach außen zum Zylindermantel.

Vorteilhafterweise ist der Ölkanal als Labyrinth mit mehreren miteinander verbundenen Kanalabschnitten ausgebildet. Diese Kanalabschnitte können eine stellenweise axiale, umfangseitige und radiale Ausrichtung haben. Die Unterteilung in Kanalabschnitte, von denen gleichartige ggf. mehrfach vorhanden sind, ermöglicht eine Adaption der Kolbenstangenführung und des Ölkanals an die jeweilige Zylinderausbildung und die Einsatzbedingungen.

Die beanspruchte Kolbenstangenführung hat insbesondere klimatechnische Vorteile. Sie lässt sich in einem sehr weiten Temperaturbereich einsetzen und behält dabei ihre Führungs- und Dichtungsfunktion sowie ihre Betriebssicherheit. Die Kolbenstangenführung eignet sich auch besonders für niedrige Umgebungstemperaturen und für den Einsatz in Kältezonen.

Die Kolbenstangenführung ist für beliebige Arten von Zylindern mit Ölfüllung oder einer anderen Fluidfüllung geeignet. Besonders vorteilhaft ist der Einsatz bei Stoßdämpfern, insbesondere Stoßdämpfern für Fahrzeuge und für den Schwerlastbereich.

In den Unteransprüchen sind weitere vorteilhafte Ausgestaltungen der Erfindung angegeben.

Die Erfindung ist in den Zeichnungen bespielhaft und schematisch dargestellt. Im einzelnen zeigen:
Figur 1: einen Zylinder mit einer Kolbenstangenführung in einer perspektivischen Ansicht,
Figur 2: eine teilweise aufgebrochene Seitenansicht des Zylinders von Figur 1,
Figur 3: eine Unteransicht der Kolbenstangenführung,

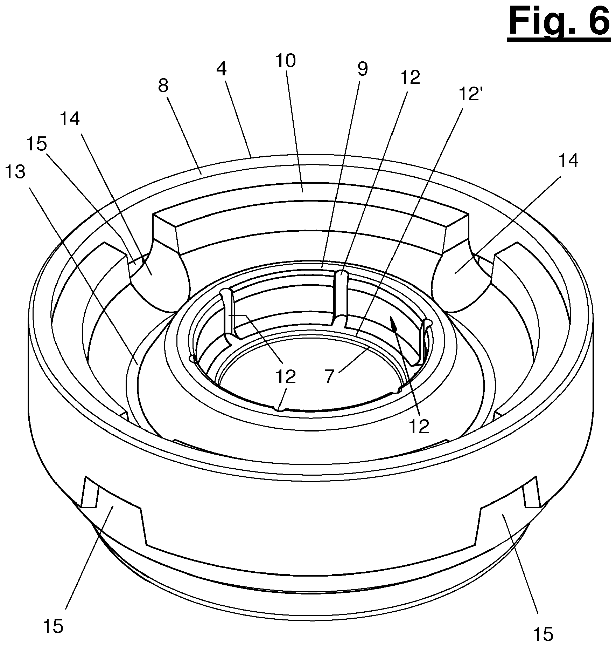

Figur 4 bis 6: eine Seitenansicht, geklappte Draufsicht und perspektivische Ansicht eines Führungselements der Kolbenstangenführung,
Figur 7: einen Schnitt durch die Kolbenstangenführung gemäß Schnittlinie VII-VII von Figur 3 und
Figur 8: eine abgebrochene und vergrößerte Detailansicht des Führungs- und Dichtungselements und eines dazwischen ausgebildeten Ölkanals.

Die Erfindung betrifft eine Kolbenstangenführung (3) für einen Zylinder (1) sowie einen damit ausgerüsteten Zylinder (1). Sie betrifft außerdem ein Herstellverfahren für die Kolbenstangenführung (2) und deren Teile.

Der Zylinder (1) weist ein oder mehrere Zylinderrohre und eine Kolbenstange (2) sowie einen Kolben auf. Der Zylinder (1) ist z.B. als Stoßdämpfer ausgebildet und ist mit Öl oder einem anderen geeigneten Fluid gefüllt. An den Stirnseiten weist der Zylinder (1) Deckel auf. Am einen Zylinderende und am äußeren Ende der Kolbenstange (2) sind Befestigungs- oder Lagerelemente, z.B. die gezeigten Lageraugen, angeordnet.

An der Austrittsseite der Kolbenstange (2) ist eine Kolbenstangenführung (3) angeordnet, die auch den Deckel bilden kann und die durch einen umgebogenen Randflansch des Zylinderaußenrohrs oder auf andere geeignete Weise in Position gehalten wird.

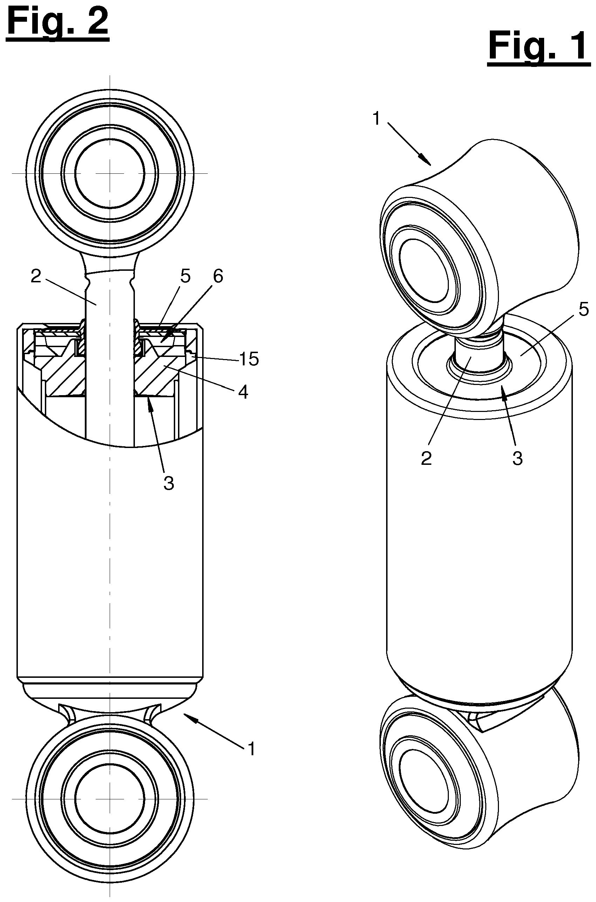

Die Kolbenstangenführung (3) weist ein Führungselement (4) und ein Dichtungselement (5) auf. Die Kolbenstangenführung (3) kann in geeigneter Weise im Zylinder gehalten und geführt sein, wobei sie z.B. gemäß Figur 2 an einem Innenrohr axial abgestützt ist. Umfangseitig kann sie am Außenrohr geführt sein.

Die Kolbenstangenführung (3) dient zur umfangseitigen Führung und Abdichtung der Kolbenstange (2) an der Austrittstelle aus dem Zylinder (1). Figur 2, 7 und 8 verdeutlichen im Schnitt die Führungs- und Dichtungssituation. Das Führungselement (4) weist einen zentralen Führungsring (7) für die Kolbenstange (2) auf. Zwischen der Kolbenstange (2) und dem Führungsring (7) kann axial zum benachbarten Zylinderende hin Öl oder ein anderes Fluid austreten und wird vom Dichtungselement (5) am Verlassen des Zylinders (1) gehindert. Über einen Ölkanal (6) wird dieses Öl aufgefangen und in den Zylinder (1) zurückgeführt.

Der Ölkanal (6) ist zwischen dem Führungselement (4) und dem Dichtungselement (5) ausgebildet, wobei die beiden Elemente (4,5) zusammenwirken und den Ölkanal (6) randseitig begrenzen. Der Ölkanal (6) kann in der gezeigten Ausführungsform das zentral an der Kolbenstange (2) austretende Öl aufnehmen und mit einer radialen Richtungskomponente nach außen zu einem oder mehreren Auslässen (15) an der Kolbenstangenführung (3) führen. Vorzugsweise sind mehrere Auslässe (15), z.B. drei oder vier Auslässe (15), vorhanden und vorzugsweise an der Außenseite bzw. dem Außenumfang der Kolbenstangenführung (3) angeordnet.

Der Ölkanal (6) weist mehrere Stränge auf und kann sich verzweigen. Er ist bevorzugt als Labyrinth ausgebildet und besteht aus mehreren miteinander verbundenen Kanalabschnitten (12,13,14), die zwischen dem Führungselement und dem Dichtungselement ausgebildet und angeordnet sind. Die Kanalabschnitte (12,13,14) können jeweils einzeln oder mehrfach vorhanden sein. Sie können unterschiedliche Ausrichtungen haben. Die Kanalabschnitte (12,13,14) können von Nuten, Rinne(n) und Überströmkanälen mit einer Abdeckung gebildet werden.

In der gezeigten Ausführungsform werden die Kanalabschnitte (12,13,14) von angeformten Vertiefungen am Führungselement (4) und einer Abdeckung durch das Dichtungselement (5) gebildet. In einer Abwandlung können Vertiefungen und Abdeckungen an beiden Elementen (4,5) ausgebildet sein. Zur Bildung von Vertiefungen können das Führungselement (4) und oder das Dichtungselement (5) an einer oder mehreren einander zugekehrten Oberflächen eine entsprechende Profilierung aufweisen.

Der Ölkanal (6) weist eine zumindest bereichsweise axiale, umfängliche und radiale Ausrichtung auf. Hierbei können die Kanalabschnitte (12,13,14) eine entsprechende Formgebung und Ausrichtung haben.

Das Führungselement (4) weist eine ringartige und in Querschnitt kreisrunde Ausbildung auf. Es besteht aus einem Korpus mit mehreren bevorzugt konzentrisch zur Kolbenstangenachse angeordneten

Ringen. Dies sind einerseits ein innerer bzw. zentraler Führungsring (7) sowie ein Außenring (8). Zwischen diesen Ringen (7,8) können ein oder mehrere Zwischenringe (9,10) angeordnet sein. Im bevorzugten Ausführungsbeispiel sind zwei Zwischenringe (9,10) vorhanden. Zwischen dem Führungsring (7) und den Zwischenringen (9,10) besteht ein radialer Abstand. Der Außenring (8) und die Zwischenringe (9,10) stehen in Axialrichtung zum benachbarten Zylinderende hin unterschiedlich weit vor und bilden an der Oberseite des Führungselements (4) einen Teil der erwähnten Profilierung.

Am Führungselement (4) sind mehrere axiale Nuten (12), mindestens eine umfängliche, d.h. in Umfangsrichtung gebogene Rinne (13), und mehrere zu den Auslässen (15) führende, insbesondere radiale Überströmkanäle (14) angeordnet. Sie bilden zusammen mit einer entsprechenden Gegenkontur des Dichtungselements (5) die besagten Kanalabschnitte (12,13,14).

Der erste oder innere Zwischenring (9) hat einen radialen Abstand vom Führungsring (7) und steht über diesen in Axialrichtung zum benachbarten Zylinderende vor. Dadurch entsteht eine umlaufende Stufe. Zwischen der Kolbenstange (2) und dem Zwischenring (9) wird hierbei eine ringtaschenartige Dichtungsaufnahme (11) gebildet, in die ein Teil des Dichtungselements (5), insbesondere ein axialer Dichtring (16), eintaucht.

Der Zwischenring (9) weist an seinem Innenumfang verteilt mehrere axiale Nuten (12) auf, die sich über die Ringhöhe erstrecken.

In dem radialen Abstand zwischen dem inneren und äußeren Zwischenring (9,10) ist mindestens eine umfängliche Rinne (13) ausgebildet. Diese ist in der gezeigten Ausführungsform als ringartige Sammelrinne ausgestaltet. Alternativ kann statt der Sammelrinne ein unterbrochener Ring von mehreren gebogenen Rinnen gebildet werden.

Der äußere Zwischenring (10) weist an seiner Oberseite eine oder mehrere rinnenartige Vertiefungen mit einer zumindest überwiegend radialen Richtungskomponente auf, welche jeweils einen Überströmkanal (14) bilden und an einem Auslass (15) angeordnet sind und dort münden. Die Überströmkanal (14) schließen außerdem an die umfängliche(n) Rinne(n) (13) an.

Die Auslässe (15) sind als randseitige Durchgangsöffnungen am Außenring (8) ausgebildet. Sie sind in Radialrichtung nach außen offen und werden von der Rohrwand des Zylinders abgedeckt. Andererseits haben sie eine axiale Ausrichtung und weisen vom benachbarten Zylinderende weg.

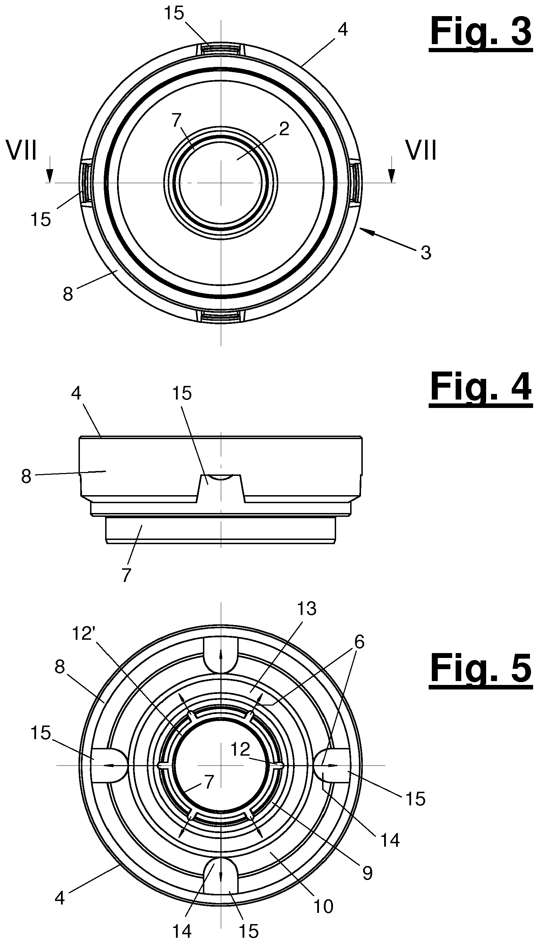

Der äußere Zwischenring (10) hat eine größere axiale Höhe als der innere Zwischenring (9) und bildet einen Stützring für das Dichtungselement (5). Hierdurch wird das Dichtungselement (5) mit axialem Abstand (21) über dem inneren Zwischenring (9) gehalten. Der Abstand oder Freiraum (21) erlaubt ein Überströmen von Öl aus den axialen Nuten (12) in die Rinne(n) (13). Von hier aus kann das Öl durch die Überströmkanäle (14) zu den Auslässen (15) strömen. Figur 5 verdeutlicht in der Draufsicht die möglichen Strömungswege des Öls im verzweigten Ölkanal (6) .

Der Außenring (8) hat gegenüber dem äußeren Zwischenring (10) eine größere axiale Höhe und bildet dadurch einen umlaufenden Rand zur umfangseitigen Führung des Dichtungselements (5).

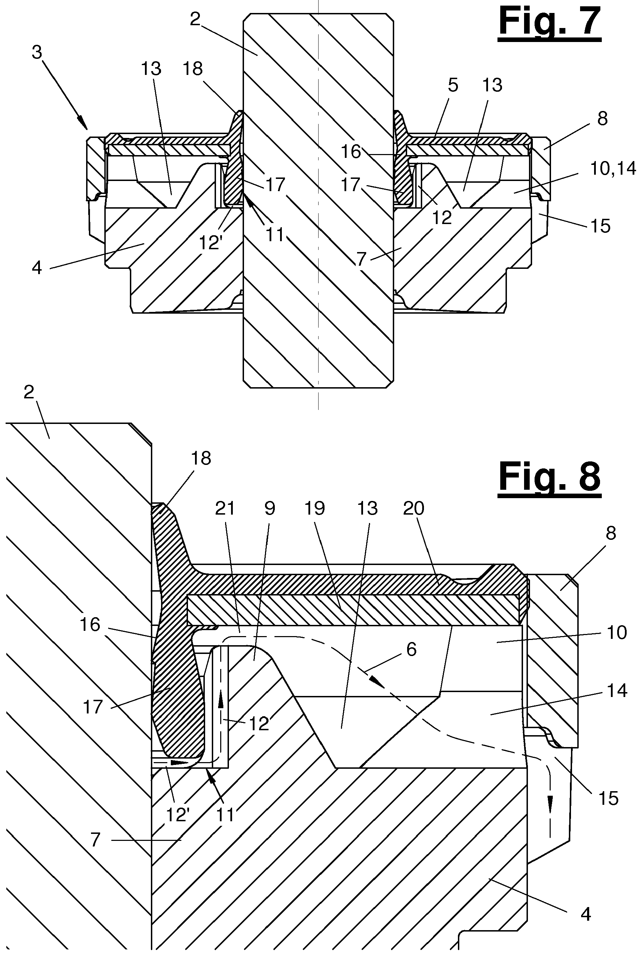

Das Dichtungselement (5) besteht aus mehreren miteinander verbundenen Teilen (16,19,20). Es weist einerseits einen an der Kolbenstange (2) anliegenden axialen Dichtring (16) auf, der bereichsweise in die vorgenannten ringtaschenartige Dichtungsaufnahme (11) axial eingreift. An den axialen Dichtring (16) schließt sich ein radialer Dichtring (20) auf, der zur Stabilisierung ein Stützelement (19), z.B. eine ringartige Stützscheibe, aufweisen kann. Figur 7 und 8 verdeutlichen diese Ausbildung.

Der Dichtring (16) weist eine ringartige Dichtlippe (17) auf, die an der Kolbenstange (2) und am ersten Zwischenring (9) anliegt. Die Dichtlippe (17) weist zur Anlage an der Kolbenstange (2) mehrere axial beabstandete Vorsprünge auf. Zwischen diesen Vorsprüngen ist auf der gegenüberliegenden Seite der Dichtlippe (17) ein Vorsprung zur Anlage an der Innenwand bzw. am Innenumfang des inneren Zwischenrings (7) vorhanden. Die Dichtlippe (17) kann über diese Anlage am inneren Zwischenring (7) radial geführt, abgestützt und in dichtender Anlage an der Kolbenstange (2) gehalten sowie ggf. angepresst werden.

Die Dichtlippe (17) ist vom Boden der Stufe zwischen dem Führungsring (7) und dem inneren Zwischenring (9) ein Stück axial distanziert, wodurch ein ringartiger Durchlass (12') für das an der Führungsstelle austretende Öl gebildet wird, an welchen die axialen Nuten (12) anschließen. Die Nuten (12) werden vom Dichtring (16) bzw. der Dichtlippe (17) innenseitig abgedeckt bzw. verschlossen. Das Öl kann gemäß Figur 8 von der Austrittstelle an der Kolbenstange (2) durch den ringartigen Durchlass (12') nach außen zu den axialen Nuten (12) und durch diese hindurch weiter zum Freiraum (21) und anschließend zum Auslass (15) strömen. In den Nuten (12) kann das Öl dabei axial und außenseitig an der Dichtlippe (17) vorbei strömen. Der ringartige Durchlass (12') bildet den Beginn des Ölkanals (6).

Der Dichtring (16) kann oberhalb der Dichtlippe (17) und am Übergang zum radialen Dichtring (20) eine Einstecktasche für die Stützscheibe (19) aufweisen. Am oberen Ende weist der Dichtring (20) eine Staubdichtung (18) auf, die an der Kolbenstange (2) anliegt.

Der radiale flache Dichtring (20) umgreift die Stützscheibe (19) und kann an der Oberseite eine ringartige Vertiefung zur Aufnahme des umgebogenen Rohrflansches des Zylinders (1) aufweisen. Der Dichtring (20) steht zumindest bereichsweise axial über den Außenring (8) vor und dichtet gegen den Rohrflansch ab.

Das Führungselement (4) kann aus einem beiliebig geeigneten Material bestehen und auf beliebige Weise hergestellt sein. Es besteht aus einem bevorzugt metallischem Material, kann aber auch aus Verbundmaterialien bestehen. Im gezeigten Ausführungsbeispiel ist es als Sinter- oder Gussteil aus Metall ausgeführt. Alternativ kann die Formgebung durch mechanisches Umformen, insbesondere Schmieden, spanabhebende Bearbeitung oder dgl. geschaffen werden.

Das Dichtungselement (5) besteht bevorzugt aus einem elastischen Material, insbesondere einem Kunststoffmaterial, wobei das Stützelement (19) aus Metall oder einem anderen geeigneten Material gebildet sein kann.

Die Materialien des Führungselements (4) und des Dichtungselements (5) können an die Einsatzbedingungen, insbesondere die Klima- und Temperaturbedingungen, angepasst sein. Ein Sintermaterial für das Führungselement (4) ist für tiefe Temperaturen, insbesondere Frost, besonders gut geeignet. Als Material für das Dichtungselement (5) eignen sich Elastomere, insbesondere Fluorelastomere, die eine besonders hohe chemische und thermische Beständigkeit haben.

Abwandlungen der gezeigten und beschriebenen Ausführungsformen sind in verschiedener Weise möglich. Der Zylinder (1) kann als Einrohrzylinder oder als Doppelrohrzylinder ausgebildet sein. Er kann ein Bodenventil und ein Aufnahmekammer für den sogenannten Stangenausgleich des Ölvolumens aufweisen.

Die Merkmale der vorbeschriebenen Ausführungsbeispiele und Ihrer Abwandlungen können beliebig miteinander Kombinierung und insbesondere auch vertauscht werden.

### BEZUGSZEICHENLISTE

- 1: Zylinder
- 2: Kolbenstange
- 3: Kolbenstangenführung
- 4: Führungselement
- 5: Dichtungselement
- 6: Ölkanal
- 7: Führungsring
- 8: Außenring
- 9: Zwischenring innen
- 10: Zwischenring außen, Stützring
- 11: Dichtungsaufnahme
- 12': ringartiger Durchlass
- 12: Kanalabschnitt, Nut
- 13: Kanalabschnitt, Rinne, Sammelrinne
- 14: Kanalabschnitt, Überströmkanal
- 15: Kanalabschnitt, Auslass
- 16: Dichtring axial
- 17: Dichtlippe
- 18: Staubdichtung
- 19: Stützscheibe
- 20: Dichtring radial
- 21: Freiraum, Abstand

## Patentansprüche

1. Kolbenstangenführung für eine Kolbenstange (2) in einem Zylinder (1), insbesondere einem Stossdämpfer, wobei die Kolbenstangenführung (3) ein Führungselement (4), ein Dichtungselement (5) sowie einen Ölkanal (6) aufweist, wobei der Ölkanal (6) einen oder mehrere Stränge aufweist, die vom zentralen Innenbereich an der Kolbenstange (2) zur Außenseite der Kolbenstangenführung (3) führen und dort an einem oder mehreren Auslässen (15) münden, wobei der Ölkanal (6) mehrere miteinander verbundene Kanalabschnitte (12,12',13,14) aufweist, die zwischen dem Führungselement (4) und dem Dichtungselement (5) ausgebildet und von beiden Elementen begrenzt sind, wobei das ringartige Führungselement (4) einen Außenring (8) sowie mindestens einen Zwischenring (9,10) aufweist und das Dichtungselement (5) einen an der Kolbenstange (2) anliegenden axialen Dichtring (16) aufweist, **dadurch gekennzeichnet, dass** der Dichtring (16) eine ringartige Dichtlippe (17) aufweist, die an der Kolbenstange (2) und am ersten Zwischenring (9) anliegt, wobei der Zwischenring (9) am Innenumfang verteilt mehrere axiale Nuten (12) aufweist, die von der Dichtlippe (17) innenseitig abgedeckt sind.

2. Kolbenstangenführung nach Anspruch 1, **dadurch gekennzeichnet, dass** der Ölkanal (6) als Labyrinth aus mehreren miteinander verbundenen Kanalabschnitten (12,12',13,14) ausgebildet ist und eine zumindest bereichsweise axiale, umfängliche und radiale Ausrichtung aufweist.

3. Kolbenstangenführung nach Anspruch 1 oder 2, **dadurch gekennzeichnet, dass** das Führungselement (4) einen zentralen Führungsring (7), einen Außenring (8) sowie zwei Zwischenringe (9,10) in konzentrischer Anordnung aufweist.

4. Kolbenstangenführung nach einem der vorhergehenden Ansprüche, **dadurch gekennzeichnet, dass** das Dichtungselement (5) einen die Zwischenringe (9,10) übergreifenden radialen Dichtring (20) mit einem stabilisierenden Stützelement (19) aufweist.

5. Kolbenstangenführung nach einem der vorhergehenden Ansprüche, **dadurch gekennzeichnet, dass** die Dichtlippe (17) zur Anlage an der Kolbenstange (2) mehrere axial beabstandete Vorsprünge aufweist, wobei zwischen diesen Vorsprüngen auf der gegenüberliegenden Seite der Dichtlippe (17) ein Vorsprung zur Anlage an der Innenwand bzw. am Innenumfang des inneren Zwischenrings (9) angeordnet ist.

6. Kolbenstangenführung nach Anspruch 3, **dadurch gekennzeichnet, dass** die Dichtlippe (17) vom Boden der Stufe zwischen dem Führungsring (7) und dem inneren Zwischenring (9) ein Stück axial distanziert ist, wodurch ein ringartiger Durchlass (12') für das an der Führungsstelle austretende Öl gebildet wird, an welchen die axialen Nuten (12) anschließen.

7. Kolbenstangenführung nach einem der vorhergehenden Ansprüche, **dadurch gekennzeichnet, dass** der Zwischenring (9) mit radialem Abstand von einem weiteren Zwischenring (10) umgeben ist, der axial weiter als der erste Zwischenring (9) vorsteht und als Stützring für das Dichtungselement (5) ausgebildet ist.

8. Kolbenstangenführung nach einem der vorhergehenden Ansprüche, **dadurch gekennzeichnet, dass** zwischen den Zwischenringen (9,10) eine ringförmige Rinne (13) ausgebildet ist, wobei die axialen Nuten (12) und die Rinne (13) über einen axialen Freiraum (21) zwischen dem Scheitel des inneren Zwischenrings (9) und dem Dichtungselement (5) verbunden sind.

9. Kolbenstangenführung nach einem der vorhergehenden Ansprüche, **dadurch gekennzeichnet, dass** der äußere Zwischenring (10) vom Außenring (8) umgeben ist, der axial weiter als der zweite Zwischenring (10) vorsteht und eine umfangseitige Führung für das Dichtungselement (5) bildet.

10. Kolbenstangenführung nach einem der vorhergehenden Ansprüche, **dadurch gekennzeichnet, dass** am Außenring (8) umfangseitig verteilt mehrere Auslässe (15) angeordnet sind.

11. Kolbenstangenführung nach einem der vorhergehenden Ansprüche, **dadurch gekennzeichnet, dass** der äußere Zwischenring (10) mehrere radiale, rinnenartig vertiefte und mit jeweils einem Auslass (15) verbundene Überströmkanäle (14) aufweist.

12. Kolbenstangenführung nach einem der vorhergehenden Ansprüche, **dadurch gekennzeichnet, dass** der Dichtring (16) am freien Ende eine Staubdichtung (18) aufweist.

13. Kolbenstangenführung nach einem der vorhergehenden Ansprüche, **dadurch gekennzeichnet, dass** das Führungselement (4) als Sinterteil oder Gussteil aus Metall ausgebildet ist.

14. Kolbenstangenführung nach einem der vorhergehenden Ansprüche, **dadurch gekennzeichnet, dass** das Dichtungselement (5) zumindest bereichsweise aus einem Elastomer, insbesondere einem Fluorelastomer, ausgebildet ist.

15. Zylinder, insbesondere Stossdämpfer, mit einem mit einer Hydraulikflüssigkeit, insbesondere Öl, gefüllten Zylinderrohr, einem Kolben, einer Kolbenstange (2) und einer Kolbenstangenführung (3), welche ein Führungselement (4), ein Dichtungselement (5) sowie einen Ölkanal (6) aufweist, **dadurch gekennzeichnet, dass** die Kolbenstangenführung (3) nach mindestens einem der Ansprüche 1 bis 14 ausgebildet ist.

## Claims

1. Piston rod guide for a piston rod (2) in a cylinder (1), in particular in a shock absorber, wherein the piston rod guide (3) has a guide element (4), a seal element (5) and an oil duct (6), wherein the oil duct (6) has one or more sections, said sections leading from the central inner region at the piston rod (2) to the outer side of the piston rod guide (3) and, there, opening out at one or more outlets (15), wherein the oil duct (6) has multiple interconnected duct portions (12, 12', 13, 14), which are formed between the guide element (4) and the seal element (5) and are delimited by both elements, wherein the ring-like guide element (4) has an outer ring (8) and at least one intermediate ring (9, 10) and the seal element (5) has an axial sealing ring (16) which bears against the piston rod (2), **characterized in that** the sealing ring (16) has a ring-like sealing lip (17) which bears against the piston rod (2) and against the first intermediate ring (9), wherein the intermediate ring (9) has, distributed around the inner circumference, multiple axial grooves (12), which are covered on the inner side by the sealing lip (17).

2. Piston rod guide according to Claim 1, **characterized in that** the oil duct (6) is formed as a labyrinth of multiple interconnected duct portions (12, 12', 13, 14) and has an at least regionally axial, circumferential and radial orientation.

3. Piston rod guide according to Claim 1 or 2, **characterized in that** the guide element (4) has a central guide ring (7), an outer ring (8) and two intermediate rings (9, 10) in a concentric arrangement.

4. Piston rod guide according to one of the preceding claims, **characterized in that** the seal element (5) has a radial sealing ring (20), engaging over the intermediate rings (9, 10), with a stabilising support element (19).

5. Piston rod guide according to one of the preceding claims, **characterized in that**, for bearing against the piston rod (2), the sealing lip (17) has multiple axially spaced apart projections, wherein, between said projections, there is arranged on the opposite side of the sealing lip (17) a projection for bearing against the inner wall or against the inner circumference of the inner intermediate ring (9).

6. Piston rod guide according to Claim 3, **characterized in that** the sealing lip (17) is at a slight axial distance from the base of the step between the guide ring (7) and the inner intermediate ring (9), whereby a ring-like passage (12') for the oil exiting at the guide point is formed, the axial grooves (12) adjoining said passage.

7. Piston rod guide according to one of the preceding claims, **characterized in that** the intermediate ring (9) is surrounded with a radial spacing by a further intermediate ring (10), which projects further axially than the first intermediate ring (9) and is formed as a support ring for the seal element (5).

8. Piston rod guide according to one of the preceding claims, **characterized in that** a ring-shaped channel (13) is formed between the intermediate rings (9, 10), wherein the axial grooves (12) and the channel (13) are connected via an axial free space (21) between the vertex of the inner intermediate ring (9) and the seal element (5).

9. Piston guide ring according to one of the preceding claims, **characterized in that** the outer intermediate ring (10) is surrounded by the outer ring (8), which projects further axially than the second intermediate ring (10) and forms a circumferential guide for the seal element (5).

10. Piston rod guide according to one of the preceding claims, **characterized in that** multiple outlets (15) are arranged in a circumferentially distributed manner on the outer ring (8).

11. Piston rod guide according to one of the preceding claims, **characterized in that** the outer intermediate ring (10) has multiple radial flow transfer ducts (14), which are depressed in a channel-like manner and are connected to in each case one outlet (15).

12. Piston rod guide according to one of the preceding claims, **characterized in that** the sealing ring (16) has, at the free end, a dust seal (18).

13. Piston rod guide according to one of the preceding claims, **characterized in that** the guide element (4) is formed as a sintered part or cast part composed of metal.

14. Piston rod guide according to one of the preceding claims, **characterized in that** the seal element (5) is formed, at least regionally, from an elastomer, in particular a fluoroelastomer.

15. Cylinder, in particular shock absorber, having a cylinder tube which is filled with a hydraulic fluid, in particular oil, a piston, a piston rod (2) and a piston rod guide (3) which has a guide element (4), a seal element (5) and an oil duct (6), **characterized in that** the piston rod guide (3) is formed according to at least one of Claims 1 to 14.

## Revendications

1. Guide de tige de piston pour une tige de piston (2) dans un cylindre (1), en particulier dans un amortisseur, le guide de tige de piston (3) présentant un élément de guidage (4), un élément d'étanchéité (5) ainsi qu'un canal d'huile (6), le canal d'huile (6) présentant un ou plusieurs tronçons qui conduisent depuis la région centrale intérieure au niveau de la tige de piston (2) vers le côté extérieur du guide de tige de piston (3) et qui débouchent à cet endroit au niveau d'une ou de plusieurs sorties (15), le canal d'huile (6) présentant plusieurs portions de canal connectées les unes aux autres (12, 12', 13, 14) qui sont réalisées entre l'élément de guidage (4) et l'élément d'étanchéité (5) et qui sont limitées par les deux éléments, l'élément de guidage annulaire (4) présentant une bague extérieure (8) ainsi qu'au moins une bague intermédiaire (9, 10) et l'élément d'étanchéité (5) présentant une bague d'étanchéité axiale (16) s'appliquant au niveau de la tige de piston (2), **caractérisé en ce que** la bague d'étanchéité (16) présente une lèvre d'étanchéité annulaire (17) qui s'applique au niveau de la tige de piston (2) et au niveau de la première bague intermédiaire (9), la bague intermédiaire (9) présentant plusieurs rainures axiales (12) réparties sur la périphérie intérieure, qui sont recouvertes du côté intérieur par la lèvre d'étanchéité (17).

2. Guide de tige de piston selon la revendication 1, **caractérisé en ce que** le canal d'huile (6) est réalisé sous forme de labyrinthe constitué de plusieurs portions de canal connectées les unes aux autres (12, 12', 13, 14) et présente une orientation au moins en partie axiale, périphérique et radiale.

3. Guide de tige de piston selon la revendication 1 ou 2, **caractérisé en ce que** l'élément de guidage (4) présente une bague de guidage centrale (7), une bague extérieure (8) ainsi que deux bagues intermédiaires (9, 10) suivant un agencement concentrique.

4. Guide de tige de piston selon l'une quelconque des revendications précédentes, **caractérisé en ce que** l'élément d'étanchéité (5) présente une bague d'étanchéité radiale (20) venant en prise pardessus les bagues intermédiaires (9, 10) avec un élément de support stabilisant (19).

5. Guide de tige de piston selon l'une quelconque des revendications précédentes, **caractérisé en ce que** la lèvre d'étanchéité (17), pour l'appui contre la tige de piston (2), présente plusieurs saillies espacées axialement, une saillie étant disposée entre ces saillies sur le côté opposé de la lèvre d'étanchéité (17) en vue de l'appui contre la paroi intérieure ou contre la périphérie intérieure de la bague intermédiaire intérieure (9) .

6. Guide de tige de piston selon la revendication 3, **caractérisé en ce que** la lèvre d'étanchéité (17) est quelque peu espacée axialement du fond du gradin entre la bague de guidage (7) et la bague intermédiaire intérieure (9), de sorte qu'il soit formé un passage annulaire (12') pour l'huile sortant au niveau du point de guidage, au niveau duquel passage se raccordent les rainures axiales (12) .

7. Guide de tige de piston selon l'une quelconque des revendications précédentes, **caractérisé en ce que** la bague intermédiaire (9) est entourée à distance radiale d'une bague intermédiaire supplémentaire (10) qui fait saillie axialement plus loin que la première bague intermédiaire (9) et qui est réalisée sous forme de bague de support pour l'élément d'étanchéité (5).

8. Guide de tige de piston selon l'une quelconque des revendications précédentes, **caractérisé en ce qu'**entre les bagues intermédiaires (9, 10) est réalisée une rigole de forme annulaire (13), les rainures axiales (12) et la rigole (13) étant connectées par le biais d'un espace libre axial (21) entre le sommet de la bague intermédiaire intérieure (9) et l'élément d'étanchéité (5).

9. Guide de tige de piston selon l'une quelconque des revendications précédentes, **caractérisé en ce que** la bague intermédiaire extérieure (10) est entourée par la bague extérieure (8), qui fait saillie axialement plus loin que la deuxième bague intermédiaire (10) et qui forme un guide périphérique pour l'élément d'étanchéité (5).

10. Guide de tige de piston selon l'une quelconque des revendications précédentes, **caractérisé en ce que** plusieurs sorties (15) réparties sur la périphérie sont disposées sur la bague extérieure (8).

11. Guide de tige de piston selon l'une quelconque des revendications précédentes, **caractérisé en ce que** la bague intermédiaire extérieure (10) présente plusieurs canaux de trop-plein (14) radiaux, renfoncés à la manière d'une rigole et connectés à chaque fois à une sortie (15).

12. Guide de tige de piston selon l'une quelconque des revendications précédentes, **caractérisé en ce que** la bague d'étanchéité (16) présente à l'extrémité libre un joint antipoussière (18).

13. Guide de tige de piston selon l'une quelconque des revendications précédentes, **caractérisé en ce que** l'élément de guidage (4) est réalisé sous forme de pièce frittée ou de pièce forgée en métal.

14. Guide de tige de piston selon l'une quelconque des revendications précédentes, **caractérisé en ce que** l'élément d'étanchéité (5) est réalisé au moins en partie à partir d'un élastomère, en particulier d'un fluoroélastomère.

15. Cylindre, en particulier amortisseur, comprenant un tube de cylindre rempli d'un liquide hydraulique, en particulier d'huile, un piston, une tige de piston (2) et un guide de tige de piston (3) qui présente un élément de guidage (4), un élément d'étanchéité (5) ainsi qu'un canal d'huile (6), **caractérisé en ce que** le guide de tige de piston (3) est réalisé selon au moins l'une quelconque des revendications 1 à 14.
